# EUROPEAN PATENT SPECIFICATION

(11) **EP 4 409 189 B1**
(45) Date of publication and mention of the grant of the patent: **12.11.2025**
(21) Application number: 22789654.5
(22) Date of filing: 23.09.2022
(51) Int. Cl.: F16L 55/40, F16L 55/32

(54) **A DRONE FOR USE WITHIN A PIPE**
DROHNE ZUR VERWENDUNG IN EINEM ROHR
DRONE DESTINÉ À ÊTRE UTILISÉ À L'INTÉRIEUR D'UN TUYAU

(30) Priority: 27.09.2021 GB 202113785
(43) Date of publication of application: 07.08.2024
(73) Proprietor: HYPERTUNNEL IP LIMITED, Hampshire RG21 4RG (GB)
(72) Inventor: JORDAN, Steve, Basingstoke Hampshire RG21 4RG (GB); MEEKS, Alan, Basingstoke Hampshire RG21 4RG (GB)
(74) Representative: Handsome I.P. Ltd
(86) International application number: PCT/GB2022/052417
(87) International publication number: WO 2023/047128

(56) References cited:
- CN-A- 111 408 588
- DE-A1- 4 114 601
- US-A1- 2004 173 116
- US-A1- 2006 290 779

## Description

The present invention relates generally to a drone for use within a pipe, a system comprising a plurality of such drones, and a method of operating said drones, and finds particular, although not exclusive, utility in tunnelling operations.

It is known to deploy robots within pipes, notably sewer pipes, in order to carry out investigations for damage, and potentially effect repairs (including milling, grinding and/or filling damaged pipes, and/or repairing such pipes by moulding and/or injection). Such robots are often provided with inspection cameras for relaying visuals to a remote operator via connected cables. Such robots may be self-propelled, but in some applications they are controlled via a connected line, conveying electrical or optical signals along a cable, and/or pneumatic or hydraulic pressure via a hose. However, there exist numerous drawbacks with these systems.

For example, US2004173116A1 describes a self-propelled robot that can move through a pipe using a set of pitched wheels arranged around its outer circumference. The pitched wheels are configured to engage with the inside of the pipe all around the robot, making it difficult, if not impossible, for the robot to pass another such robot or other obstacle within the pipe.

According to a first aspect of the invention, there is provided a drone for use within a pipe, the drone comprising: a plurality of wheels configured to enable movement of the drone along a pipe; a payload bay configured to retain a payload therein; a wireless communication device configured to enable communication therewith; a guide on one end of the drone, configured to direct another such drone around the drone; and wherein the drone is further configured to rotate about an axis of the pipe to enable the drone to pass another such drone within the pipe.

**In** this way, the drone may be remotely operated by a user while down a pipe, without the need for cumbersome communication cabling.

Wireless communication may be via any known technology, including Radio Frequency (RF), Wi-Fi, optical and/or sonic communication. Such communication may be substantially along a pipe, and/or may comprise communication through a substrate in which the pipe is placed.

The wireless communication device may be configured to enable communication with another such automated drone.

**In** this way, communication along a pipe, which may be hampered due to surrounding geology, can be achieved over long distances by using additional drones to relay messages, for instance by forming a mesh network therebetween.

This may also enable communication between a surface operator and a drone, and/or between drones spaced along a pipe, or between drones present in different pipes, for instance so that operations can be synchronised. The surface operator may comprise a human, but may equally comprise an operation processor and/or control system.

The drone may further comprise a coupling to connect to another such drone.

**In** this way, the drones may form a train, such that the drone may push and/or pull a second drone, and/or additional drones. A train of drones may comprise two or more drones, for example only two, or only or at least three, four, five or six drones.

The coupling may be configured to provide transfer of consumables therebetween.

However, in some arrangements, transfer of consumables and/or equipment may be via a different mechanism. For example, when adjacent to one another, drones may transfer a payload directly between their respective payload bays. Specifically, when passing one another in a pipe, two drones may transfer a payload directly between their respective payload bays, through an opening in their upper surfaces, for instance as their upper surfaces are arranged back to back.

**In** this way, consumables such as power, materials and/or equipment may be shared between drones. For example, the drone may be provided with a power supply for powering a tool located on another drone in a train of drones. More generally, a drone may operate on its own, or it may operate in consort with one or more additional drones arranged in a train, such that one provides power, another provides a drive unit for moving the train, and another provides equipment for carrying out activity down the pipe.

The payload bay may be configured to removably receive a payload therein.

**In** this way, payloads may be interchangeable. However, as an alternative, payload(s) may be permanently arranged within the payload.

The payload bay may be configured to retain only one, or a plurality of payloads therein.

The payload may comprise one or more of: a power supply (for example a batter or batteries), a drive unit (for example an electric motor) for driving the wheels, a tool (for example a drill, drill bit, a fluid injection system, a nozzle and/or a 3D printer), a consumable (for example, fluid, gas, water, grout and/or cement), equipment (e.g. cameras, sensors, ground penetrating radar, seismic monitoring equipment, and/or tomographic equipment) for use onboard the drone, or for deployment inside or outside of the pipe.

**In** this way, the drones may be used for deploying equipment and/or materials inside and outside a pipe, repairing sections of pipe, clearing debris and/or salvaging/rescuing stranded equipment (including other such drones).

The drone may be provided with an exterior shell and/or housing.

The drone may be remotely and/or manually operated. Any remote operation may be via an automated control system, or by other means. Alternatively or additionally, the drone may be fully and/or partially autonomous (for example, it may be preprogrammed or controlled by artificial intelligence).

The drone may be provided with cameras and/or other sensors to provide visual and./or other feedback to a remote operator, or to a remote or local processor for image recognition and/or machine learning.

The wheels may be free to rotate, or they may be driven by a drive unit. A track may extend between at least two wheels to form a caterpillar track; however, in preferred arrangements no track is present.

The drone may comprise locks to fix the drone's position in a pipe. The locks may simply comprise a means for preventing rotation of the wheels. However, in alternative/additional arrangements, the locks may comprise wedges and/or teeth for extending out from the drone to grip a portion of pipe to prevent movement therein.

The wheels may comprise omni-directional wheels. Alternatively or additionally, the wheels may comprise longitudinal wheels for longitudinal movement (e.g. aligned with the length of the drone) for movement along a pipe. Optionally, the wheels may comprise lateral wheels for movement about an axis of pipe, for example, for movement perpendicular to movement of the longitudinal wheels. The lateral wheels may enable orientation of the payload around an axis of the pipe.

**In** particular, the drone may be further configured such that the drone can move laterally about an axis of a pipe.

**In** this way, or using alternative means, the payload may be orientated in substantially any direction out of the pipe, including horizontal and vertical. **In** addition, the drone may operate in pipes of any shape and configuration, including straight, curved, horizontal and vertical.

In this way, drones may be able to move laterally so as to be able to pass each other within the pipe.

The drone may comprise a guide only on one end thereof, or on both ends thereof.

The guide may comprise a ramp. The ramp may form a section of a helix, for instance a quarter or half turn. In this way, the ramp may cause the drone or the another such drone to move laterally around the axis of the pipe so that each drone can pass the other. The guide may comprise a helical ramp configured to cause the drone to move laterally around the axis of the pipe so the drone can pass the other drones within the pipe.

The drone may have a profile that is substantially semi-circular. In this way, two such drones may pass each other in a single circular pipe of substantially the same diameter.

However, in some arrangements, one drone may have a profile of less than half of a circle, for example a third. In other arrangements, one drone may have a profile of more than half of a circle, for example two-thirds. In this way, a one-third-profile drone could pass a two-thirds profile drone in a similar manner to two semi-circular cross section drones.

The drones could be programmed with a rank such that each drone will yield to a drone of higher rank, for example by ceasing operations, moving out of the way, or securing itself in position so that a higher ranking drone may pass.

In some arrangements, a drone may draw a hose or cable through a pipe for subsequent use by a piece of equipment in the pipe. For example, one drone may pull a hose behind it, for subsequent use in supplying grout/cement down the pipe.

According to a second aspect of the present invention, there is provided a system comprising a plurality of drones according to any preceding claim.

According to a third aspect of the present invention, there is provided a method of operating the drone(s) according to the first or second aspect, the method comprising the steps of communicating wirelessly with the drone within a pipe.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.
Figure 1 is a perspective view of a first drone.
Figure 2 is a perspective view of a second drone.
Figure 3 is a perspective view of a third drone.
Figure 4 is a perspective view of a fourth drone.
Figure 5 is a representation of a plurality of drones being used in a single tunnelling operation.
Figure 6 shows the operation of the helical ramp of the second drone.
Figure 7 is a perspective view of two fifth drones.
Figure 8 is a perspective view of a sixth drone.
Figure 9 is a schematic view of a train of drones.
Figure 10 is an end view of two asymmetric drones passing one another.
Figure 11 is a perspective view of a first one of the asymmetric drones of figure 10.
Figure 12 is a perspective view of a second one of the asymmetric drones of figure 10.
Figure 13 is a perspective view of an extending wheel of the second one of the asymmetric drones of figure 10.
Figure 14 is a perspective view of a wheel of the first one of the asymmetric drones of figure 10.
Figure 15 is an end view of the first one of the asymmetric drones of figure 10.
Figure 16 is a perspective view of a part of a drone.

The present invention will be described with respect to certain drawings but the invention is not limited thereto but only by the claims. The drawings described are only schematic and are non-limiting. Each drawing may not include all of the features of the invention and therefore should not necessarily be considered to be an embodiment of the invention. In the drawings, the size of some of the elements may be exaggerated and not drawn to scale for illustrative purposes. The dimensions and the relative dimensions do not correspond to actual reductions to practice of the invention.

Furthermore, the terms first, second, third and the like in the description and in the claims, are used for distinguishing between similar elements and not necessarily for describing a sequence, either temporally, spatially, in ranking or in any other manner. It is to be understood that the terms so used are interchangeable under appropriate circumstances and that operation is capable in other sequences than described or illustrated herein. Likewise, method steps described or claimed in a particular sequence may be understood to operate in a different sequence.

Moreover, the terms top, bottom, over, under and the like in the description and the claims are used for descriptive purposes and not necessarily for describing relative positions. It is to be understood that the terms so used are interchangeable under appropriate circumstances and that operation is capable in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Similarly, it is to be noticed that the term "connected", used in the description, should not be interpreted as being restricted to direct connections only. Thus, the scope of the expression "a device A connected to a device B" should not be limited to devices or systems wherein an output of device A is directly connected to an input of device B. It means that there exists a path between an output of A and an input of B which may be a path including other devices or means. "Connected" may mean that two or more elements are either in direct physical or electrical contact, or that two or more elements are not in direct contact with each other but yet still co-operate or interact with each other. For instance, wireless connectivity is contemplated.

Reference throughout this specification to "an embodiment" or "an aspect" means that a particular feature, structure or characteristic described in connection with the embodiment or aspect is included in at least one embodiment or aspect of the present invention. Thus, appearances of the phrases "in one embodiment", "in an embodiment", or "in an aspect" in various places throughout this specification are not necessarily all referring to the same embodiment or aspect, but may refer to different embodiments or aspects. Furthermore, the particular features, structures or characteristics of any one embodiment or aspect of the invention may be combined in any suitable manner with any other particular feature, structure or characteristic of another embodiment or aspect of the invention, as would be apparent to one of ordinary skill in the art from this disclosure, in one or more embodiments or aspects.

Similarly, it should be appreciated that in the description various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Moreover, the description of any individual drawing or aspect should not necessarily be considered to be an embodiment of the invention. Rather, as the following claims reflect, inventive aspects lie in fewer than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some features included in other embodiments, combinations of features of different embodiments are meant to be within the scope of the invention, and form yet further embodiments, as will be understood by those skilled in the art. For example, in the following claims, any of the claimed embodiments can be used in any combination.

In the description provided herein, numerous specific details are set forth. However, it is understood that embodiments of the invention may be practised without these specific details. In other instances, well-known methods, structures and techniques have not been shown in detail in order not to obscure an understanding of this description.

In the discussion of the invention, unless stated to the contrary, the disclosure of alternative values for the upper or lower limit of the permitted range of a parameter, coupled with an indication that one of said values is more highly preferred than the other, is to be construed as an implied statement that each intermediate value of said parameter, lying between the more preferred and the less preferred of said alternatives, is itself preferred to said less preferred value and also to each value lying between said less preferred value and said intermediate value.

The use of the term "at least one" may mean only one in certain circumstances. The use of the term "any" may mean "all" and/or "each" in certain circumstances.

The principles of the invention will now be described by a detailed description of at least one drawing relating to exemplary features. It is clear that other arrangements can be configured according to the knowledge of persons skilled in the art without departing from the underlying concept or technical teaching, the invention being limited only by the terms of the appended claims.

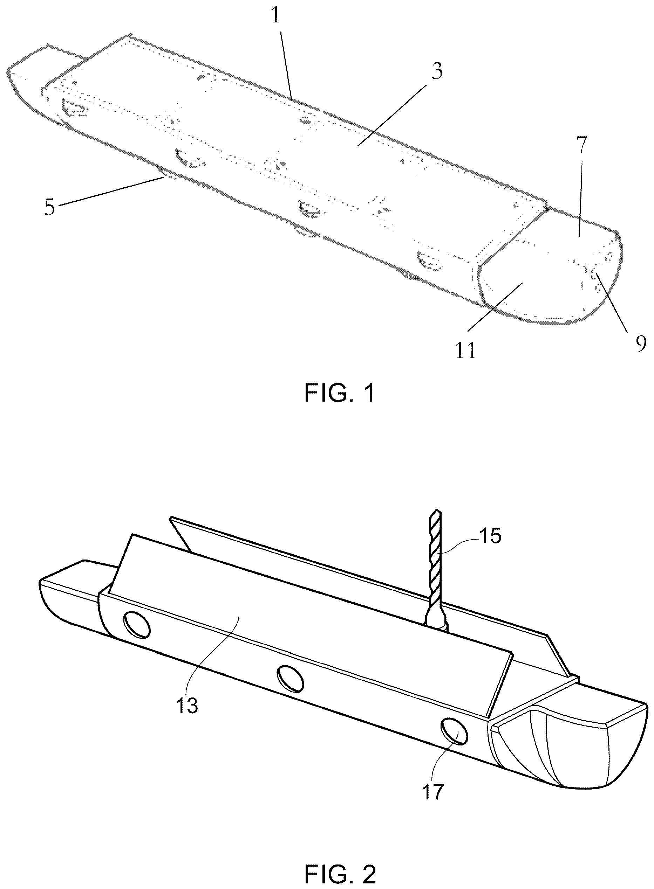

Figure 1 is a perspective view of a first drone having a flat upper surface 1 in which are disposed a series of four access panels 3. The drone has a substantially semi-circular cross-section along a majority of its length, formed by a uniformly-curved surface into which are mounted a plurality of wheels 5. The wheels 5 are substantially disc-shape, and are mostly embedded within the surface of the drone.

At each end of the drone is an end section that serves two purposes. A first part 7 of the end portion has a substantially quarter-circle cross-section, and is provided with three connectors 9 (suitable for coupling multiple drones together to form a train). The connectors 9 may be physical, mechanical, electric or fluidic connectors.

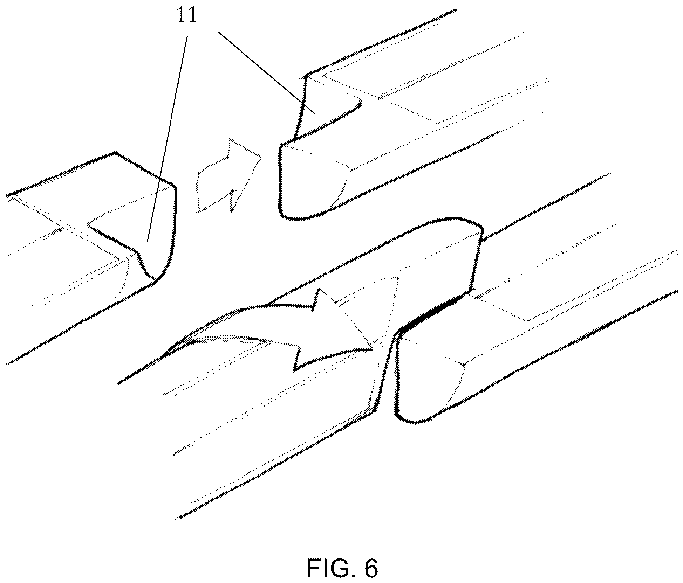

A second part 11 of the end portion comprises a quarter-turn of a helical ramp, the operation of which will be described in more detail later, with reference to figure 6.

Figure 2 is a perspective view of a second drone, similar to the first drone but differing in that its upper surface is provided with just two doors 13 that provide access to an interior region in which equipment may be stored. The figure shows a piece of equipment in the form of a drill 15 being deployed into a working position from the interior region. Drive equipment for actuating the drill 15 may also be present within the interior region, but this is not shown.

In addition, the second drone differs from the first drone by the provision of fewer spherical ball wheels 17 being arranged in its curved surface, and by the absence of connectors being visible; however, it is to be appreciated that electromagnetic connectors may be located within the first part 7 of the end portion.

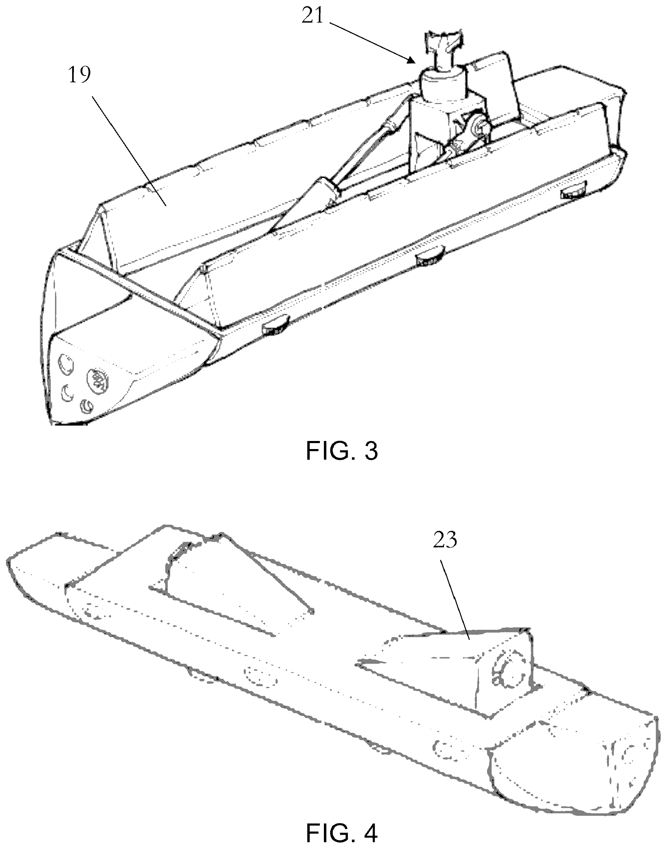

Figure 3 is a perspective view of a third drone, similar to the first drone but shorter in length, and therefore provided with fewer wheels along its length. As with the second drone, the third drone has just two doors 19 in its upper surface that provide access to an interior region in which equipment may be stored; however, in this arrangement, the doors 19 are bi-fold doors. A different piece of equipment 21 is shown deployed from the interior region in a similar manner to the drill 15.

Figure 4 is a perspective view of a fourth drone that is similar to the third drone, but instead of doors providing access to an interior region, two pop-out devices 23 are configured to rise out of its upper surface. These devices could be lights, cameras or other sensors for performing monitoring applications.

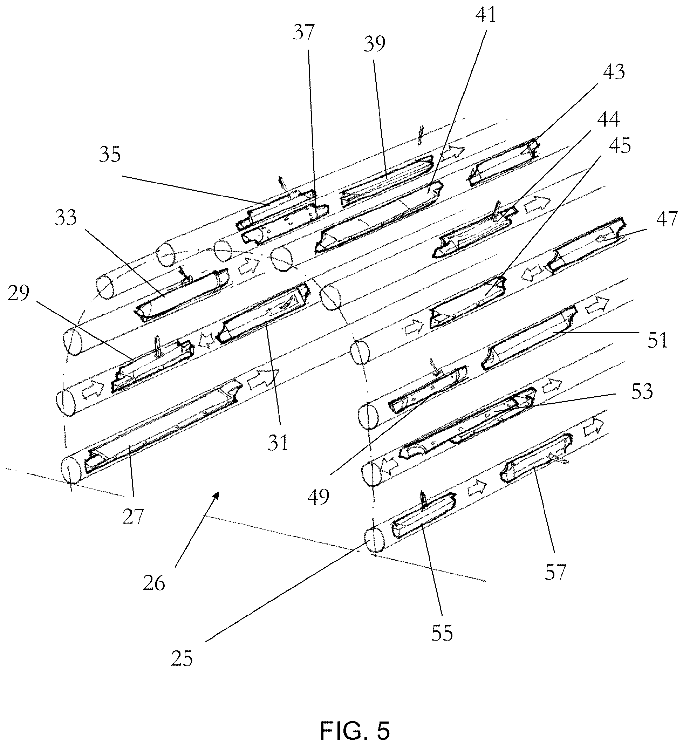

Figure 5 is a representation of a plurality of drones being used in a single tunnelling operation. Twelve individual pipes 25 are shown extending from an intended tunnel opening 26 into bedrock (not shown) in a horseshoe profile. Moving clockwise from the bottom left of the figure: in the first pipe a train 27 of four drones is shown moving into the tunnel; in the second pipe a first drone 29 is shown drilling out through the pipe, and a second drone 31 moving back toward it; in the third pipe a single drone 33 is shown drilling out through the pipe; the fourth pipe is shown empty; in the fifth pipe a single drone 35 is shown drilling out through the pipe; in the sixth pipe a first drone 37 is shown upside down, and a second drone 39 is shown moving down the pipe; in the seventh pipe a train of three drones 41 and a single drone 43 are shown stationary; in the eighth pipe a single drone 44 is shown drilling out through the pipe; in the ninth pipe the drones 45, 47 are shown moving toward each other; in the tenth pipe a first drone 49 is shown drilling out through the pipe while a second drone 51 moves away from it down the pipe; in the eleventh pipe two droves 53 are shown passing each other; and in the twelfth pipe two drones 55, 57 are shown drilling upwards and outwards, respectively.

Figure 6 shows the operation of the helical ramp of the second drone. In the upper part of the figure, two such drones are shown moving toward one another with their respective helical ramp portions 11 aligned. As the two drones move toward each other, their respective helical ramp portions 11 interlock and force relative rotation of the drones about their common axis. In the present figure, for the sake of clarity, one of the drones is shown as being held stationary, which may be achieved by locking it against a pipe wall; however, it is to be appreciated, that both may move only a quarter rotation in order to pass.

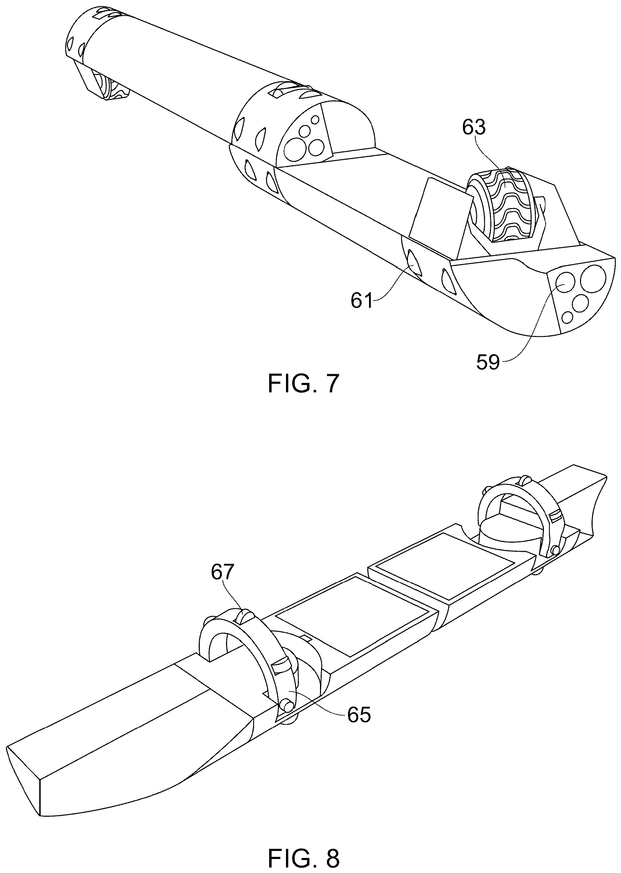

Figure 7 is a perspective view of two fifth drones having engaged in the passing operation show in figure 6. Each of these drones differ in that they are provided with four connectors 59 on the connecting portion, and ball wheels 61 located adjacent to their respective ends.

Adjacent to each helical portion 11 is an extending wheel 63 that is configured to be projectable from the upper surface. Accordingly, the extending wheel 63 is able to support the distal end of the drone when the proximal end is engaging its helical portion 11 with that of another drone.

Figure 8 is a perspective view of a sixth drone with an alternative to the extending wheel of figure 7 in the form of a pivotable ring section 65 on which are provided a plurality of ring wheels 67, similar to the wheels 5 on the uniformly curved surface.

This sixth drone is actually formed as two sections 69 joined together without a helical portion therebetween; rather, the helical portions are simply disposed at either end.

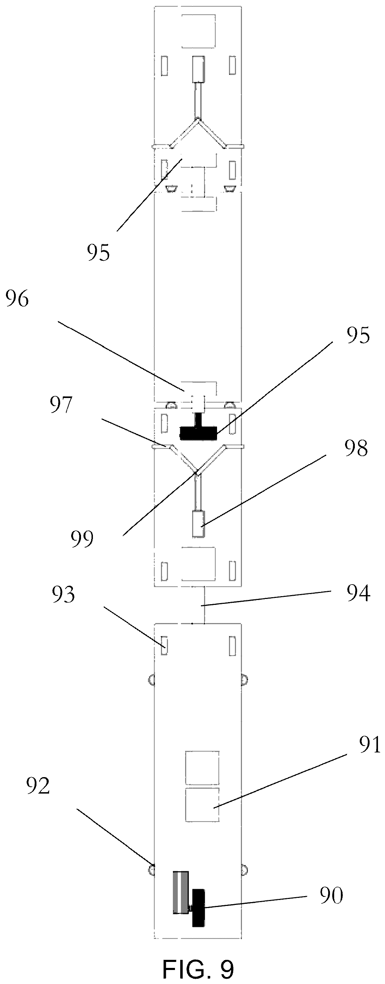

Figure 9 is a schematic view of a train of four drones. No helical portions are shown at either end, for clarity, and to illustrate an alternative arrangement.

At the front of the train, a drive unit is provided with a traction wheel 90 and encoder to drive and monitor a position of the train. The drive unit houses batteries and a processor 91 for powering and controlling the drive unit. Ball wheels 92 are provided around the periphery of the drive unit to enable the drive unit to be located laterally. Finally, caster wheels 93 are provided to assist movement along the pipe.

Following the drive unit, and linked thereto by a connector 94, is a three-part carriage, comprising a central payload bay located between two identical rotation units. The rotation units each comprise a motor 95 for rotating the payload bay relative thereto. Encoders 96 are provided on the payload bay for determining a rotational position of the payload relative to the rotation units.

To prevent accidental movement of the rotation units when the motors 95 thereof are rotating the payload bay, projecting/retractable locking pins 97 are provided for engaging with an inside surface of the pipe in which the train is in operation. The locking pins 97 are actuated with actuator 98, via mediation coupling 99.

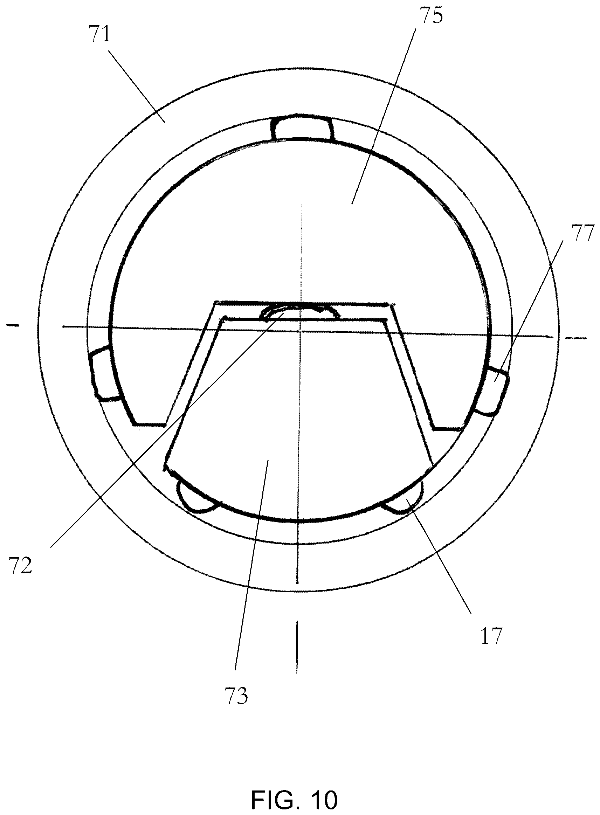

Figure 10 is an end view of a pipe 71, inside which are disposed two asymmetric drones passing one another: a one-quarter drone 73 is disposed in a lower portion of the pipe, with ball wheels 17 engaging the lower inside surface of pipe 71, and an extending wheel 72 engaging a three-quarter drone 75 passing over the one-quarter drone 73. The three-quarter drone 75 is shown with omni-directional wheels 77 engaging side and upper inside surface of the pipe 71.

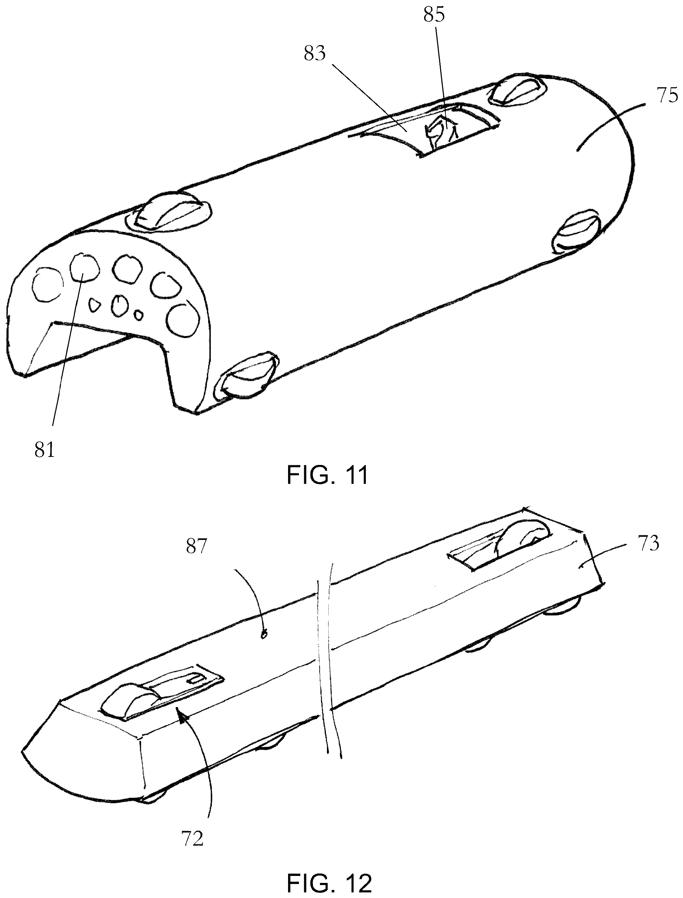

Figure 11 is a perspective view of the three-quarter drone 75 of figure 10, with additional detail shown in the form of connectors 81 at a proximal end thereof. In addition, an access hole 83 is provided in which a drill bit 85 is ready to be deployed.

Figure 12 is a perspective view of the one-quarter drone 73 of figure 10, showing an extending wheel 72 at each end. The upper surface 87 may contain hatches for access, but these are not shown for clarity.

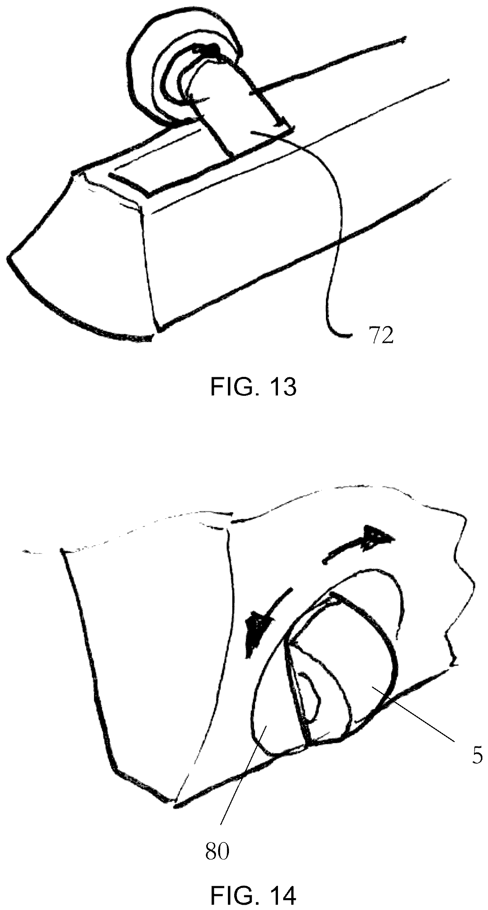

Figure 13 is a perspective view of the extending wheel 72, shown in the extended position.

Figure 14 is a perspective view of an omni-directional wheel 77 of the three-quarter drone 75. The omni-directional wheel comprises a disc shape wheel 5 configured to rotate about its axis of symmetry about an axle (not shown), which is itself embedded in a rotating collar 80 that is configured to rotate about an axis perpendicular to the axle (in the direction of the arrows).

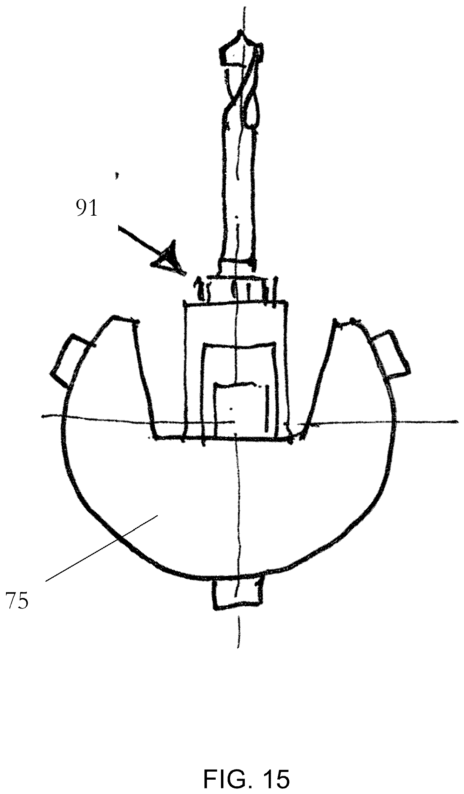

Figure 15 is an end view of the three-quarter drone 75 with a drill tool 91 in a deployed position for drilling into the pipe in which it is placed.

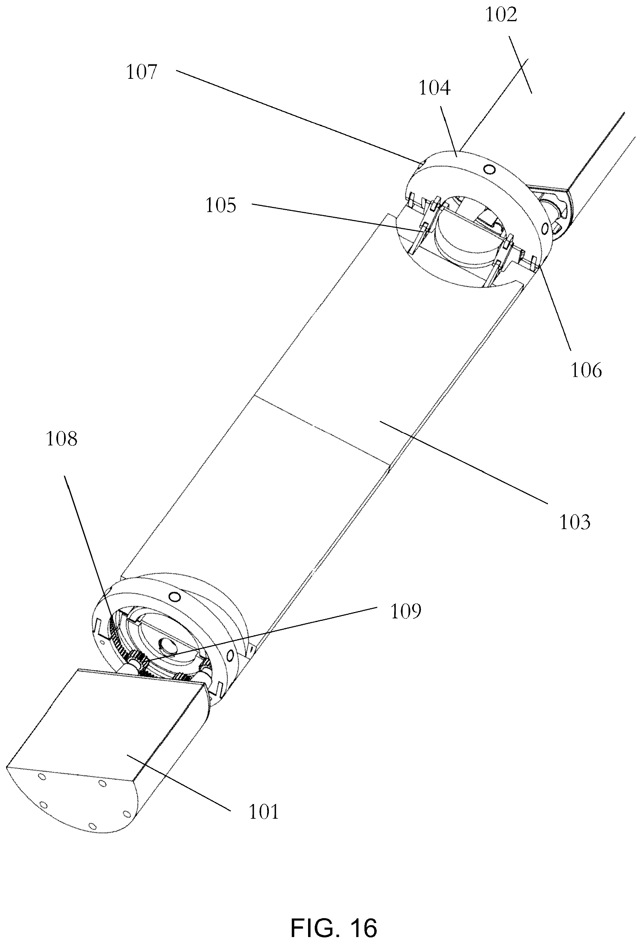

Figure 16 is a perspective view of a part of a drone having a first rotation part 101 at a first end thereof, and a second rotation part 102 at an opposing end thereof, only part of which is shown for clarity. In between the first rotation part 101 and the second rotation part 102 is a payload part 103, which is longitudinally symmetric.

Each rotation part 101, 102 is provided with a rotation motor (not shown) for rotating the payload part 103 about its longitudinal axis. In the figure, the payload part is shown tilted by an angle of approximately 30 degrees relative to the rotation parts 101, 102.

In order to stabilize the payload part 103 during its rotation, folding ring sections 104 are shown in their extended position. Extension and/or retraction thereof is enabled by virtue of arms 105 for pushing and/or pulling the ring sections 104 about a hinge 106. On an exterior periphery of the ring sections 104 are provided ball wheels that enable free rotation about the pipe's longitudinal axis.

On an internal surface of the ring sections 104 is provided a toothed annular gear 108 for meshing with three toothed pinions 109, each of which is driven by the rotation motor in the respective rotation part 101, 102. In this way, once the ring sections 104 have been extended, the rotation parts 101, 102 may rotation the payload part 103 about the pipe's longitudinal axis by merely activating the toothed pinions 109.

Unintentional counter-rotation of the rotation parts may be prevented by providing pipe gripping means (not shown), or merely by connecting rotation parts to more massive drones at either end (also not shown).

## Claims

1. A drone for use within a pipe (71), the drone comprising:
a plurality of wheels (5) configured to enable movement of the drone along a pipe (71);
a payload bay configured to retain a payload (15) therein;
a wireless communication device configured to enable communication therewith;
wherein the drone is further configured to rotate about an axis of the pipe (71) to enable the drone to pass another such drone within the pipe (71),
**characterised by**
a guide on one end of the drone, configured to direct another such drone around the drone.

2. The drone according to claim 1, wherein the wireless communication device is configured to enable communication with another such automated drone.

3. The drone according to claim 1 or claim 2, further comprising a coupling (9) to connect to another such drone.

4. The drone according to claim 3, wherein the coupling (9) is configured to provide transfer of consumables therebetween.

5. The drone according to any preceding claim, wherein the payload bay is configured to removably receive a payload (15) therein.

6. The drone according to any preceding claim, further configured such that the drone comprises lateral wheels configured to cause the drone to rotate about an axis of the pipe (71) to pass other drones within the pipe (71).

7. The drone according to any preceding claim, wherein the guide comprises a helical ramp (11) configured to cause the drone to move laterally around the axis of the pipe (71) so the drone can pass the other drones within the pipe (71).

8. A system comprising a plurality of drones according to any preceding claim.

9. A method of operating the drone(s) according to any preceding claim, the method comprising the steps of communicating wirelessly with the drone within a pipe (71).

## Patentansprüche

1. Eine Drohne zur Verwendung innerhalb eines Rohrs (71), wobei die Drohne umfasst:
eine Vielzahl von Rädern (5), die konfiguriert sind, um die Bewegung der Drohne entlang eines Rohrs (71) zu ermöglichen;
einen Nutzlastschacht, der konfiguriert ist, um eine Nutzlast (15) darin aufzunehmen;
eine drahtlose Kommunikationseinrichtung, die konfiguriert ist, um die Kommunikation damit zu ermöglichen;
wobei die Drohne ferner konfiguriert ist, sich um eine Achse des Rohrs (71) zu drehen, um der Drohne zu ermöglichen, eine andere solche Drohne innerhalb des Rohrs (71) zu passieren,
**gekennzeichnet durch**
eine Führung an einem Ende der Drohne, die konfiguriert ist, um eine andere solche Drohne um die Drohne herum zu leiten.

2. Die Drohne nach Anspruch 1, wobei die drahtlose Kommunikationseinrichtung konfiguriert ist, um die Kommunikation mit einer anderen automatisierten Drohne zu ermöglichen.

3. Die Drohne nach Anspruch 1 oder Anspruch 2, ferner umfassend eine Kopplung (9) zur Verbindung mit einer anderen solchen Drohne.

4. Die Drohne nach Anspruch 3, wobei die Kopplung (9) konfiguriert ist, um den Transfer von Verbrauchsmaterialien zwischen den Drohnen zu ermöglichen.

5. Die Drohne nach einem der vorhergehenden Ansprüche, wobei der Nutzlastschacht konfiguriert ist, um eine Nutzlast (15) entnehmbar aufzunehmen.

6. Die Drohne nach einem der vorhergehenden Ansprüche, ferner konfiguriert, sodass die Drohne Seitenräder umfasst, die konfiguriert sind, um die Drohne zu veranlassen, sich um eine Achse des Rohrs (71) zu drehen, um andere Drohnen innerhalb des Rohrs (71) zu passieren.

7. Die Drohne nach einem der vorhergehenden Ansprüche, wobei die Führung eine spiralförmige Rampe (11) umfasst, die konfiguriert ist, um die Drohne zu veranlassen, sich lateral um die Achse des Rohrs (71) zu bewegen, sodass die Drohne die anderen Drohnen innerhalb des Rohrs (71) passieren kann.

8. Ein System, umfassend eine Vielzahl von Drohnen nach einem der vorhergehenden Ansprüche.

9. Ein Verfahren zum Betreiben der Drohne(n) nach einem der vorhergehenden Ansprüche, wobei das Verfahren die Schritte des drahtlosen Kommunizierens mit der Drohne innerhalb eines Rohrs (71) umfasst.

## Revendications

1. - Drone destiné à être utilisé à l'intérieur d'un tuyau (71), le drone comprenant :
une pluralité de roues (5) configurées pour permettre un déplacement du drone le long d'un tuyau (71) ;
un compartiment de charge utile configuré pour retenir une charge utile (15) à l'intérieur de celui-ci ;
un dispositif de communication sans fil configuré pour permettre une communication avec celui-ci ;
le drone étant en outre configuré pour tourner autour d'un axe du tuyau (71) afin de permettre au drone de dépasser un autre tel drone à l'intérieur du tuyau (71),
**caractérisé par** un guide à une extrémité du drone, configuré pour diriger un autre tel drone autour du drone.

2. - Drone selon la revendication 1, dans lequel le dispositif de communication sans fil est configuré pour permettre une communication avec un autre tel drone automatisé.

3. - Drone selon la revendication 1 ou la revendication 2, comprenant en outre un organe de couplage (9) pour se connecter à un autre tel drone.

4. - Drone selon la revendication 3, dans lequel l'organe de couplage (9) est configuré pour permettre un transfert de consommables entre eux.

5. - Drone selon l'une quelconque des revendications précédentes, dans lequel le compartiment de charge utile est configuré pour recevoir de manière amovible une charge utile (15) à l'intérieur de celui-ci.

6. - Drone selon l'une quelconque des revendications précédentes, configuré en outre de telle sorte que le drone comprenne des roues latérales configurées pour amener le drone à tourner autour d'un axe du tuyau (71) pour dépasser d'autres drones à l'intérieur du tuyau (71).

7. - Drone selon l'une quelconque des revendications précédentes, dans lequel le guide comprend une rampe hélicoïdale (11) configurée pour amener le drone à se déplacer latéralement autour de l'axe du tuyau (71) afin que le drone puisse dépasser les autres drones à l'intérieur du tuyau (71).

8. - Système comprenant une pluralité de drones selon l'une quelconque des revendications précédentes.

9. - Procédé de fonctionnement du(des) drone(s) selon l'une quelconque des revendications précédentes, le procédé comprenant les étapes de communication de manière sans fil avec le drone à l'intérieur d'un tuyau (71).
